# EUROPEAN PATENT SPECIFICATION

(11) **EP 1 088 214 B1**
(45) Date of publication and mention of the grant of the patent: **29.04.2009**
(21) Application number: 00925106.7
(22) Date of filing: 20.04.2000
(51) Int. Cl.: G01N 21/55, G01N 21/64

(54) **METHOD AND DEVICE FOR IMAGING AND ANALYSIS OF BIOPOLYMER ARRAYS**
VERFAHREN UND VORRICHTUNG ZUM ABBILDEN UND ANALYSIEREN VON BIOPOLYMERARRAYS
PROCEDES ET DISPOSITIF D'IMAGERIE ET D'ANALYSE DE JEUX ORDONNES D'ECHANTILLONS DE BIOPOLYMERES

(30) Priority: 21.04.1999 EE 9900072
(43) Date of publication of application: 04.04.2001
(73) Proprietor: Genorama OÜ, 50410 Tartu (EE)
(72) Inventor: METSPALU, Andres, EE50103 Tartu (EE); BERIK, Jevgeni, EE50415 Tartu (EE); KURG, Ants, EE50304 Tartu (EE)
(74) Representative: Sarap, Margus
(86) International application number: PCT/EE2000/000001
(87) International publication number: WO 2000/063677

(56) References cited:
- WO-A-00/62042
- WO-A-00/62105
- US-A- 3 939 350
- US-A- 4 297 032
- US-A- 4 608 344
- US-A- 4 818 710
- US-A- 4 850 686
- US-A- 5 633 724

## Description

### TECHNICAL FIELD

The present invention falls in the fields of molecular biology, molecular diagnostics and laser optics. It more specifically concerns a method of parallel detection and analysis of fluorescently labelled biopolymer molecules on a two-dimensional array, using total internal reflection fluorescence and a device for fluorescence detection.

### BACKGROUND ART

On chemical binding of pre-fabricated short biopolymers (nucleic acids, peptides etc) on a solid transparent support (glass) in a two-dimensional structure, the said array structure can be used for diagnostic purposes, for example, when adding (hybridizing) a sample target nucleic acid to the array of bound nucleotide polymers. The target sample may be labelled with fluorophores prior to hybridization, but the incorporation of the label may take place immediately prior to scanning. For imaging and analyzing nucleic acid arrays, apparatuses based on different physical principles may be used, mainly falling in two categories: firstly, detectors and secondly, scanners based on confocal microscopy.

The document US5633724 discloses an apparatus for detecting a target substance in a pixel array. The apparatus uses a total internal reflection (TIR) and comprises light source, TIR member and light detector. The light detector is adapted to detect light emitted from the array as result of evanescent excitation of the target substance.

The document US4608344 describes a method for the determination of the species in solution with an optical wave-guide. The apparatus comprises generally the optical probe, light source, focusing lenses, mirror and cylindrical lens.

The document US3939350 discloses the apparatus for carrying out immunoassays using the amount of fluorescence as an indication of the presence of a compound or composition to be detected. The apparatus comprises a light source, optical system comprising prism and interface.

US4818710 provides a method for optically ascertaining parameter of species in a liquid analyse. There is provided the apparatus comprising the light source, beams and rotating mirror. From the document US4850686 is known the apparatus for adjusting light beam direction comprising two prisms. The documents WO00/62042 and WO0062105 describe cuvette and the optical waveguide using the total internal reflection fluorescence.

The closest model to the device described in this invention, a fluorescence detector based on total internal reflection, is an instrument based on CCD camera called GenoSensor™, manufactured by Vysis, Inc. (Downers Grove, IL, USA).

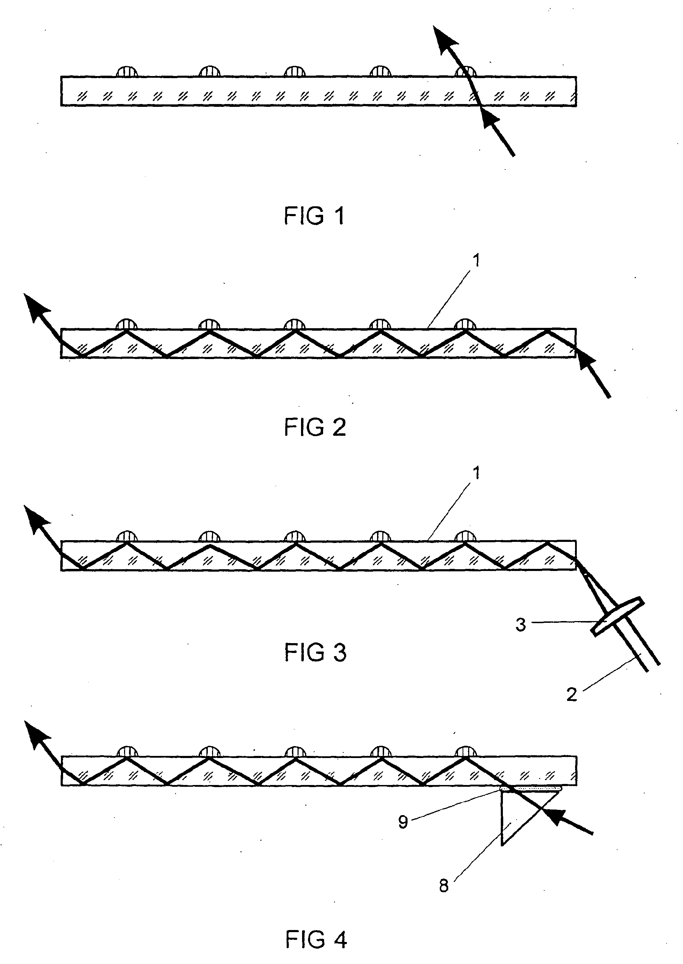

The CCD camera-based instrument GenoSensor™ functions as follows. The fluorescently labelled target molecules, hybridized to DNA probes bound on a glass support, are detected following excitation by light traversing the DNA array (fig. 1). The light is generated by a xenon bulb and passed through a filter to select for the necessary spectral band. The light emitted by fluorophores will be filtered through an emission filter and guided through an optical system onto the high-resolution cooled CCD camera. The signals obtained will be processed in a computer.

A nucleic acid array is a high-density, two-dimensional structure of nucleic acid molecules bound to a solid transparent support. Assessing the results of a biological reaction made on the array is problematic due to the low sensitivity and selectivity (using traversing light for excitation of fluorochromes is inefficient as a band for excitation has to be filtered out of the full spectrum) and the speed of detection (scanning is usually time-consuming). As in the case of arrayed primer extension reaction (APEX), four different dideoxynucleotides or terminators, each carrying a different fluorophore, are used simultaneously in the reaction, a detector functioning in four spectral areas is needed for imaging the nucleic acid array. The said detector must be capable of maximal excitation and signal capture of each fluorophore, enabling an assembly of composite reaction result.

### DISCLOSURE OF INVENTION

As a solution to the problems mentioned above, this invention suggests a method comprising total internal reflection fluorescence (fig. 2) for imaging biopolymer arrays (like determining sequences of target DNA) and a device of fluorescence detector enabling a quick and precise estimation of reaction results on a nucleic acid array in four different spectral bands. The invention is defined in claim 1.

The purpose of this invention is to provide a device and method for the analysis of biological reactions made on a biopolymer array or "chip". The arrays of nucleic acids can mainly be used in two ways. Firstly, in the case of assays based on hybridization only, the fluorescently labelled target to be analyzed will be hybridized to genetic material immobilized on the array. The label has been incorporated in the course of amplification. As the energy of hydrogen bonds formed between nitrogen bases in the double strand nucleic acid is limited, this type of hybridization-based reaction mechanism is not particularly selective and does not permit a clear distinction between signal and noise.

Another possibility lies in the addition of an enzymatic reaction to the hybridization of immobilized oligonucleotide probes and the target nucleic acid. An example would be polymerase-mediated extension, where every immobilized oligonucleotide becomes elongated by one, fluorescently labelled nucleotide. The DNA polymerase adds a nucleotide with respect to the genetic information of the target DNA.

The arrayed DNA extension reaction uses as a substrate for DNA polymerase, dideoxynucleotides labelled with fluorophores. Four differently labelled dideoxynucleotides are used simultaneously, but only one will be incorporated in a probe, that corresponding to the primary structure of the target nucleic acid.

The said enzymatic mechanism possesses advantages over the reaction based solely on hybridization:
1. If the hybridization between the immobilized probe and the target is not perfect, the polymerase will neither recognize the structure nor carry out a reaction.
2. If the hybridization is perfect, the enzyme will incorporate a dideoxynucleotide in the probe, synthesizing a stable covalent bond. This enables a wash of the array after the reaction and getting rid of non-specifically bound biological material. Thus a substantially improved signal/noise ratio will be achieved, enabling this system to detect heterozygous mutations.

The method described in this invention is used for analysis of biopolymer arrays. A beam of light of known wavelength (a laser beam) is directed into the edge of the support (glass) under an angle that will evoke total internal reflection of the beam. The support becomes a waveguide (fig. 2). A certain part of light will not reflect from the inner surface of glass but will penetrate out of the glass as an evanescent wave. Its intensity will fall exponentially but will remain sufficient for a distance of ¼ of the wavelength. This distance is sufficient to excite the fluorophores incorporated in the probes bound immediately to the glass. As in the case of polymerase extension there are four different nucleotides/labels, laser beams of four different wavelengths are used to achieve maximal excitation of fluorescent labels. The light emitted will be gathered through respective emission filters to discard the background light and focused through an optical system (objective) into a CCD camera. As the camera used is cooled, the imaging time is short, taking about 10 seconds for each nucleotide/fluorescence channel.

### BRIEF DESCRIPTION OF DRAWINGS

The invention is described with the help of figures, where:
fig. 1 is the excitation of fluorochromes on the surface of a biopolymer array by a traversing light;
fig. 2 is the said excitation by total internal reflection fluorescence according to the method in this invention;
fig. 3 is an application of the method in this invention where the laser beam to evoke total internal reflection is focused through a cylindrical lens thus that its diameter is less than the thickness of the support;
fig. 4 is an application of the method in this invention where a prism is used to direct the laser beam into the support. Between the prism and the support there is transparent liquid, refractive index of which is close to those of the prism and the support;
fig. 5 is the principal design of the device in this invention, the fluorescence detector.

Figures 2 to 4 illustrate the method in this invention for imaging biopolymer arrays. The fluorescently labelled biopolymer molecules are bound to a thin transparent support with parallel walls (1). For maximal excitation of the fluorescent molecules a laser beam (2) is used. The beam is focused through a cylindrical lens (3) in a shape of a fan thinner than the edge (1), wherein the beam is directed into the edge (1) under such an angle that the support becomes a waveguide of total internal reflection.

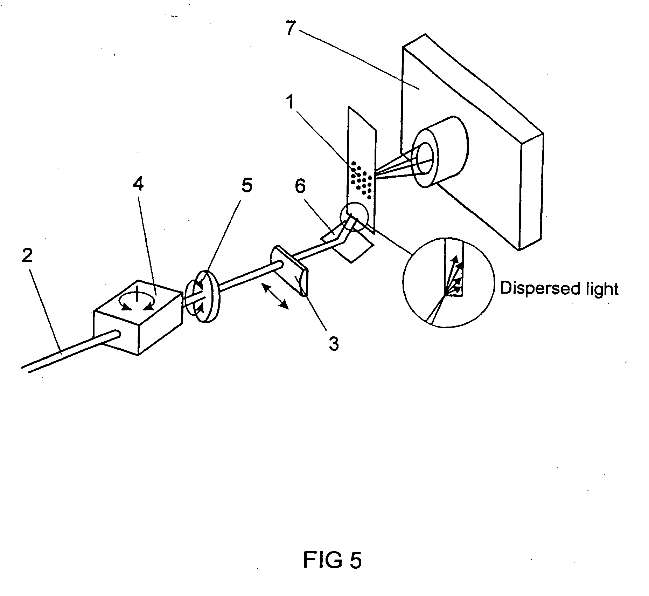

The fluorescence obtained by laser beam is optically directed to a light-sensitive element which renders images of the fluorescent molecules bound on the support (1). The fluorescents obtained by previously prescribed mechanism is projected to the light-sensitive element, which enables to obtain to the support (1) the images of the bound and excited by laser beam fluorescent molecules as shown in the fig. 5. The laser beam is directed to the support through the side surface. A digitally controlled CCD camera is used as the light-sensitive element. The laser beam is scattered through a transparent slab or hexahedron (4) and modulated in the same time with an optical wedge (5). These elements combined modify the angle of the laser beam coming from the mirror (6) into the support (1).

To direct the beam into the support (1) trough the edge surface the prism (8) is used as shown in the fig. 4. To reduce the reflection loss in transitions of the light from the prism (8) to support (1) is used the transparent liquid (9), for example the immersion oil used in the microscopy, which refractive index is close to the refractive index of the prism (8) and the support (1).

Obviously many modifications and variations of the present invention are possible in light of the above prescribed embodiment. It is therefore to be understood to the person skilled in the art that within the scope of the added claims the invention may be practiced otherwise than as specifically described.

## Claims

1. A fluorescence detector for imaging and analysis of a biopolymer array comprising:
a) transparent support (1) onto which is bound the biopolymer array;
b) optical injection means (4, 3, 6) arranged to direct and couple a beam of light of a predetermined wavelength into the edge of said transparent support (1) under total internal reflection conditions such that said support functions as a waveguide, said optical injection means (4, 3, 6) comprising a cylindrical lens (3), a beam redirecting mirror (6) and a transparent hexahedron or slab (4) with rotating means, said transparent hexahedron or slab (4) and said rotating means being arranged such as to enable a scanning movement of the beam of light along the length of the support's edge; and
c) band-pass filters and a digitally controlled CCD camera (7) arranged to detect fluorescence light obtained from the biopolymer array.

2. A fluorescence detector according to claim 1**, characterized in that** said fluorescence detector comprises further a modulating element (5) with rotating means, said modulating element (5) is arranged between the transparent hexahedron (4) and cylindrical lens (3) to enable distribution of the light even more in the transparent support (1).

3. A fluorescence detector according to claim 2, **characterized in that** the modulating element (5) is an optical wedge revolving around its axis, wherein the axis of the optical wedge lies close to the optical axis of the beam of light, for example laser beam.

4. A fluorescence detector according to any claim from 1 to 3, **characterized in that** the edge or side surface of entry of a laser beam into the transparent support (1) is polished so as to provide a greater intensity of the laser beam in said support.

5. A fluorescence detector according to any claim from 1 to 3, **characterized in that** the edge or side surface of entry of the laser beam into the transparent support (1) is frosted so as to provide a more even distribution of the laser beam in said support.

## Patentansprüche

1. Fluoreszenzdetektor für Abbildung und Analyse von Biopolymergemischen hat folgende Bestandteile:
a) transparenter Träger, an den das Biopolymergemisch gebunden ist;
b) optische Einspritzung (4, 3, 6), bedeutet die Anordnung erfolgte, um einen Lichtstrahl mit genau festgelegter Wellenlänge an den Rand des erwähnten transparenten Trägers unter Totalreflexionsbedingungen zu leiten und anzukoppeln, so dass der erwähnte Träger als Lichtwellenleiter fungiert, die erwähnte optische Einspritzung (4, 3, 6) enthält eine zylindrische Linse (3), einen den Strahl umleitenden Spiegel (6) und einen transparenten Hexaeder oder eine Platte (4) mit rotierenden Teilen, der transparente Hexaeder oder die Platte und die rotierenden Teile müssen so angeordnet werden, dass eine Scanbewegung des Lichts entlang der Länge des Trägers ermöglicht wird;
c) Bandpassfilter und eine digital kontrollierte CCD-Kamera (7), die so angeordnet werden müssen, dass sie von dem Biopolymergemisch ausgehendes Fluoreszenzlicht wahrnehmen können.

2. Fluoreszenzdetektor nach Anspruch 1, **dadurch gekennzeichnet, dass** des weiteren auch aus einem regulierenden Element (5) mit rotierenden Teilen besteht, dieses regulierende Element (5) wird zwischen dem transparenten Hexaeder (4) und den zylindrischen Linsen (3) platziert, um auch in dem transparenten Träger (1) eine bessere Verteilung des Lichts zu ermöglichen.

3. Fluoreszenzdetektor nach Anspruch 2, **dadurch gekennzeichnet, dass** das regulierende Element (5) ein optischer Keil ist, der sich um seine Achse dreht, wobei die Achse des optischen Keils nahe an der Achse des Lichtstrahls, beispielsweise des Laserstrahls, liegt.

4. Fluoreszenzdetektor nach Anspruch 1 bis 3, **dadurch gekennzeichnet, dass** die Ecke oder Oberfläche des Eintritts des Laserstrahls in den transparenten Träger (1) poliert wird, um die Verteilung von Licht und eine größere Intensität des Laserstrahls in dem erwähnten Träger zu erreichen.

5. Fluoreszenzdetektor nach Anspruch 1 bis 3, **dadurch gekennzeichnet, dass** die Kante oder Seitenoberfläche der Eintrittsstelle des Laserstrahls in die transparenten Träger (1) mattiert ist, um eine gleichmäßigere Verteilung des Laserstrahl-Lichtes in der erwähnten Auflage zu ermöglichen.

## Revendications

1. Un détecteur fluorescent pour l'analyse d'une collection biopolymerique qui comprend:
a) support transparent (1) sur lequel il y a une collection biopolymerique;
b) injection optique signifie (4, 3, 6) indiqué pour diriger et doubler un faisceaux de lumière d'une longueur d'onde prédéterminé sur le coté du support transparent (1) dans le totales condition de réflexion ces fonctions de support comme longueur d'onde, dit injection optique signifie (4, 3, 6) qui comprend des lentilles cylindriques (3), un faisceau de miroir (6) et un hexahedron transparent (4) avec rotation dit hexahedron transparent (4) et dit rotant qui signifie disposé pour aider le mouvement de contrôle du faisceau de lumière sur la longueur du coté de support; et
c) filtres et camera contrôlés au niveau digital (7) pour trouver la lumière fluorescente obtenue de la collection biopolymerique.

2. Détecteur de fluorescence selon la revendication 1, **caractérisé** dans ce détecteur de fluorescence dit comprend davantage une modulation élément (5) avec des moyens de rotation, l'élément de modulation (5) est arrangé entre l'hexhaedron transparent (4) et les lentilles cylindriques (3) pour la distribution de la lumière dans le support transparent (1).

3. Détecteur de fluorescence selon la revendication 2, **caractérisé** dans l'élément modulateur (5) est un instrument optique qui tourne autour de son axe tandis que l'axe du support optique se trouve près de l'axe optique du faisceau de lumière, par exemple un faisceau laser.

4. Détecteur de fluorescence selon n'importe quelle réclamation de 1 et 3, **caractérisé par** la surface d'entrée du faisceau laser dans le support transparent (1) est le polisseur pour la dispersion de la lumière du faisceau laser dans le support.

5. Détecteur de fluorescence selon n'importe quelle réclamation de 1 et 3, **caractérisé par** la surface d'entrée du faisceau laser dans le support transparent (1) est le givré pour la dispersion de la lumière du faisceau laser dans le support.
